# EUROPEAN PATENT APPLICATION

(11) **EP 1 251 218 A1**
(43) Date of publication of application: **23.10.2002**
(21) Application number: 01870086.4
(22) Date of filing: 21.04.2001
(51) Int. Cl.: E04D 11/00, E04D 7/00, E03B 3/02, E04D 13/04

(54) **A device for collecting and storing water from the environment**

(71) Applicant: Dautzenberg, Bert, 3800 Sint-Truiden (BE)
(72) Inventor: Dautzenberg, Bert, 3800 Sint-Truiden (BE)
(74) Representative: Luys, Marie-José A.H.

(57) **Abstract**

This invention relates to a device suitable for collecting and at least temporarily storing water on a substantially horizontal supporting surface to be at least partly covered by a multi-layer structure (10), the multi-layer structure comprising the following layers
(a) a base layer (1) provided to be applied to the flat surface, the base layer (1) being substantially impermeable to water,
(b) a water-retaining layer (3) comprising a plurality of water storage volumes (7) for receiving and storing water,
(c) a filter layer (4) covering the water-retaining layer (3),
(d) between the base layer (1) and the water-retaining layer (3), a layer of a water absorbing material (2) to allows positioning of the water-retaining layer (3).
At least part of the water storage volumes (7) of the water-retaining layer (3) are dimensioned such that they are capable of containing bulk water (18). The device comprises a water-level detector (8) for the water-retaining layer (3) and discharging water from the multi-layer structure (10) to a second predetermined water-level, towards a water consumption circuit (11) if the water level in the water-retaining layer (3) exceeds a first predetermined value.

## Description

### BACKGROUND OF THE INVENTION.

The present invention relates to a device suitable for collecting and at least temporarily storing water on a substantially horizontal surface, to be at least partly covered by a multi-layer structure, the multi-layer structure comprising a plurality of super-imposed layers as described in the preamble of the first claim.

### DESCRIPTION OF THE PRIOR ART.

Until now, water buffers build on top of a roof often consisted of roof vegetation systems, which, in the mean time have gained increasing popularity partly because of the heat insulation effect involved. To allow culturing vegetation on top of the roof a wide variety of laminar sheets have been developed. As the laminar sheets must meet specific vegetation requirements, take care of supplying sufficient water to the plants and be resistant to the roots of the plants, most of them are quite expensive. However, despite the wide variety of existing sheet systems, roof vegetation systems show a number of unwanted disadvantages. Damage to the roofing by the plant roots, cannot be completely avoided. Repairing of the roof, following damage by the plant roots, is laborious and expensive. Absorption and release of water proceed relatively slow. The vegetation, the vegetation growing substrate and the need to large volumes for storing of water, have been found to seriously increase the roof load thus necessitating the construction of a more expensive roof substructure.

There is thus a need to a structure with which on the one hand water may be collected when raining, at least temporarily stored after having been collected and be released if so desired.

From FR-A-2.677.062 a supporting panel for pedestrian use, for the construction of trafficable flat roofs of buildings is known. The supporting panel is provided to cover a supporting surface of a rigid or slightly porous supporting structure laying on top of the roof. The panel comprises a core of a honeycombe material made of a thermoplastic polymer. The honeycombe panel comprises a plurality of vertical spaces and is covered on both sides by a water permeable textile. The top layer is covered by a porous water permeable lining, which is attached to the honeycombe panel through an adhesive. The above described structure in turn is covered by a top layer of for example concrete, stones, wood, synthetic gras, etc.

WO96/11313 discloses to cover a building roof with a structure capable of retaining and evaporating water contained therein. The water-retaining structure of WO96/11313 is intended for use with industrial buildings, with the intention of reducing the dimensions of the internal drainage system and the water purification capacity. The water-retaining structure may be mounted along the sides of the roof or may be applied to the complete roof surface. The improved water intake properties and the improved evaporation capacity allow achieving an improved climate in the neighbourhood as well as inside the building. The water-retaining structure of WO96/11313 is usually mounted on top of a water impermeable film covering the top of the roof, and comprises a first layer of a material capable of collecting and retaining water attached thereto. The water-retaining material is covered by a filter layer to avoid that impurities end up in it. The filter layer may be permeable to water and water vapour, be substantially impermeable to water but improve the mechanical resistance of the structure, or it may be a UV resistant material to improve the influence of UV to the water-retaining structure.

The water-retaining layer comprises a plurality of water storage volumes. The water-retaining layer may for example be an open porous foamed product, a fleece, a non-woven material with high suction or water resorption capacity, or a material comprising a plurality of capillaries which extend throughout the thickness of the material and have a diameter substantially smaller than thickness of the material. As the water-retaining layer is accessible from the outside, water can be received by the structure when raining and evaporated back into the environment with dry weather.

The water-retaining structure of WO96/11313 is designed to provide a temporary water storage capacity, capable of absorbing water in a fast manner when raining, and of releasing the thus absorbed water in a fast manner when the weather gets dry again. It has a limited water storage capacity but is not designed to function as a water storage volume.

The increased water consumption in the recent years in industrial as well as domestic environments, the increased costs involved in the purchasing of water and engagements in environmental awareness, have implied a need to a system in which water may be recovered from the environment, preferably stored on a longer term basis for further use. As flat roofs provide a free surface area with significant dimensions, which with most buildings is not used, they constitute a readily available surface for storing water.

### SUMMARY OF THE INVENTION.

It is an object of this invention to provide a structure or a device in which water can be collected from the environment, in particular from the air, and temporarily stored in such a way that it is available for use in a neighbouring building.

### DESCRIPTION OF THE INVENTION.

This is achieved with the present invention with the technical features of the characterising part of the first claim.

The device of this invention comprises a multi-layer structure suitable for at least temporarily storing water, part of which remains available as bulk water. The water-retaining structure comprises
(a) a base layer which is substantially impermeable to water. The base layer is provided to be applied to the supporting surface, for example the roofing, and to shield this surface off from the stored water. The supporting surface may for example be a roof or another surface for example a ground surface, parking place etc. preferably in the vicinity of the building intended to make use of the stored water.
(b) a water-retaining layer comprising a plurality of hollow, water capturing volumes for receiving and storing water. At least part of the capturing volumes in the water-retaining layer has a top face which is substantially open and capable of capturing water. At least part of the capturing volumes is dimensioned such that they are capable of storing and containing bulk water.
(c) a filter layer covering the water-retaining layer, to prevent that impurities end up in the bulk water
(d) a layer of a water absorbing material, positioned between the base layer and the water-retaining layer. Absorption of water by this layer allows to substantially increasing the weight thereof and to counteract displacement of the multi-layer structure with strong winds or heavy weather. As this water-absorbing layer always contains absorbed water, it is automatically kept in its position and does not necessitate further fixation although this may be done.
(e) the device further comprises a water level detector for measuring the level of the water contained in the water-retaining structure or the water-retaining layer. The water level detector is connected to a water discharge system for discharging water from the water-retaining structure to a water consumption circuit if the water in the water retaining structure exceeds a predetermined value. Water is discharged until a first predetermined level is reached.

Water seeping through the filter layer when raining, is collected, filtered and stored as liquid bulk water within the water capturing volumes of the water-retaining layer. This water which is stored as liquid water, is immediately available for further use. The fact that the water can readily flow to the water-retaining layer without necessitating any capillary activity or having to pass vegetation increases the rate with which water may be captured by the multi-layer structure. Besides the fact that the water layer has a heat isolating function, it is also sound-proofing.

Monitoring the water level and discharging of the water from the multi-layer structure to a water consumption circuit allows controlling the level of the stored water and preventing overloading the surface supporting the multi-layer structure. The water consumption circuit may be a water storage volume, for example a pond or a container, a sanitary equipment of the neighbouring building or a combination thereof, or any other water consumption circuit known to the man skilled in the art. With the present invention a roof is provided to function as a water reservoir. The excess of water may at least temporarily be stored in the storage container. In that way a buffer is provided which monitors periods with a lot of precipitation and dryer periods.

In a preferred embodiment of the invention, the water level detector is coupled to a monitor for controlling a water flow from the water storage volume to the water-retaining structure if the water level in the water-retaining layer is lower than a second predetermined level. This is not only done to maintain insulation properties, but also to avoid degradation of the multi-layer structure or parts thereof when dry. The first predetermined water level may be approximately equal to or different from the second predetermined water level.

The water level monitor may also be coupled to a monitor controlling the water need of a sanitary equipment of a building neighbouring the multi-layer structure. In case a signal is received from the sanitary equipment, the monitor ensures a water transport from either the water-retaining structure or the water storage volume, depending on the water level in the water-retaining structure, until the amount needed is replenished.

The above described technical features of this invention provide a flexible system for capturing water in a water retaining structure and storing part of the captured water in the water retaining structure. The excess of water may be discharged to a water consumption circuit if there is a need to replenish water, or to a water storage container. In case the water level in the water retaining structure is insufficient water can be replenished from the water container to the water consumption circuit.

The connection to the water consumption circuit ensures that the water-retaining layer can be substantially emptied of water in case temperatures get low, to prevent damaging of the material by frozen water. With warm or sunny weather the water contained in the multi-layer structure heats up, which involves evaporation of stored bulk water and implies a cooling effect to the supporting roof surface and the building covered by it.

To further shield the water stored in the holes of the water-retaining layer from daylight and UV-light and to counteract algal growth or development, the multi-layer structure is on top covered by a layer of a porous particulate material. A supporting layer on top of the filter layer will preferably take care of receiving and supporting the particulate material. The supporting layer will mostly be a net or web like material or sheet with holes for receiving the partiulate material at least partly.

If so desired, two or more of the base layer, the water absorbing layer, the water-retaining layer and the filter layer may be comprised in one single multi-layer film to facilitate commercialisation and mounting of the device.

The invention also relates to a roof which is at least partly covered with the device of this invention.

The invention will be further explained in the appending figures and description of the figures.

### BRIEF DESCRIPTION OF THE DRAWINGS.

Figure 1 is a cross section of the multi-layer water-retaining structure of this invention.
Figure 2 is a schematic view to the device of this invention applied to the roof of a building.

### DESCRIPTION OF THE PREFERRED EMBODIMENTS OF THE INVENTION.

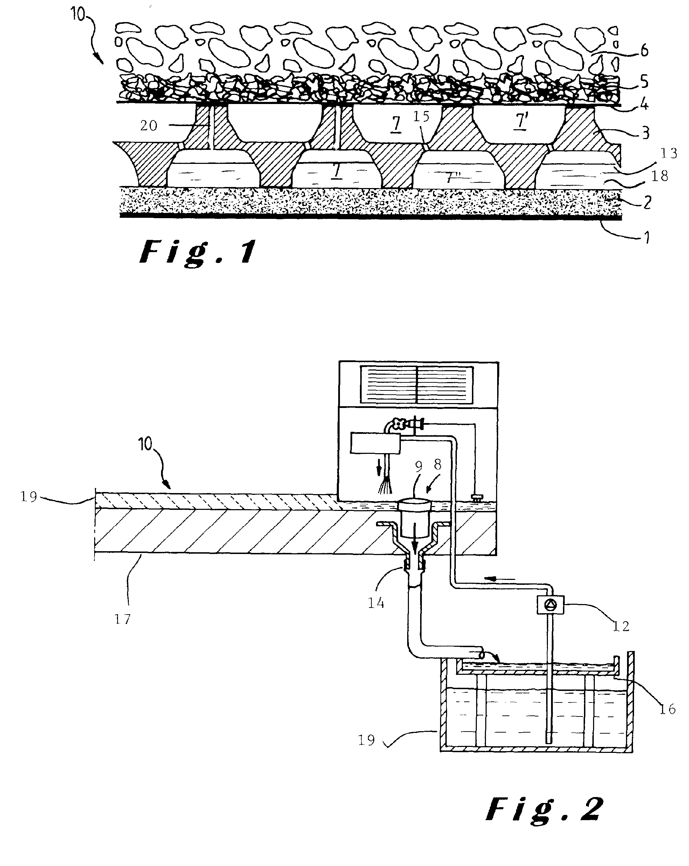

The water-retaining device 10 of this invention shown in figure 2 is positioned on top of the exposed upper surface 19 of the roofing material of a roof 17 as a supporting surface. The water-retaining device 10 may however also be positioned on top of any other substantially flat or horizontal surface area of the desired dimensions.

The water-retaining device comprises a laminar multi-layer, water-retaining structure 10 built up of a plurality of super-imposed, preferably substantially parallel extending layers or sheets 1-6. The multi-layer water-retaining structure is received within a surrounding rim, to provide a closed volume. Preferably, either the individual layers or a plurality of the layers 1-6 are secured to the supporting surface 19 or the upstanding rim surrounding the part of the supporting surface functioning as a water reservoir. This may be done in various ways well known to the man skilled in the art. As will become apparent from the following description, each of the layers 1-6 has a specific function in the multi-layer water-retaining structure 10. Each sheet of the multi-layer water-retaining structure may be a sheet with a surface area similar to the surface area to be covered. Mostly, the sheets will be available in the shape of strips.

The multi-layer water-retaining structure 10 comprises a base layer or sheet 1, provided for positioning on top of the exposed upper surface 19 of the roofing. The base layer 1 is preferably made of a material which is substantially impermeable to water to prevent water from leaking from the water-retaining structure to the roof. Suitable materials include polyethylene films, rubber films, PVC films or any other water impermeable materials known to the man skilled in the art. In general, the material of the base layer 1 will be adapted to the material of which the other layers of the multi-layer structure are made to prevent that the weight of the multi-layer structure amounts too high. The dimensions of the base layer 1 are such that it covers the sides of the surrounding rim, to provide a closed volume. The base layer 1 may however also be the roofing layer of the roof.

On top of the base layer 1, a layer or sheet of water absorbing material 2 is positioned. As care is taken that this material virtually always contains absorbed water, it functions as a positioning layer for the water-retaining structure by permanently increasing its weight.
The water absorbing layer 2 may be made of various materials, but is preferably made of a non-woven material. Suitable materials include polyethylene fibers, polypropylene fibers, fibers of ethylene-propylene copolymers, polyester fibers, or any other non-woven material known to the man skilled in the art. An example of a suitable material is SSM 45 supplied by Zinco, the Netherlands, which is a polypropylene fleece with a density of approximately 470 g/m² and a water absorption capacity of approximately 5l/m². This material is available in sheets of 2 x 50 m. However any other material, with higher or lower water absorption capacities, weight and dimensions, known to the man skilled in the art may be used.

On top of the water-absorbing layer 2, a sheet of a water-retaining layer 3 is positioned. This water-retaining sheet 3 comprises a plurality of water storage volumes 7. The water storage volumes may be contained in several levels of the water-retaining layer 3. The water storage volumes 7' in the upper level are accessible to the environment, to allow capturing and storing of raining water in these volumes. The water storage volumes 7" in the lower level are not directly accessible from the environment. The volumes 7" are connected to the water storage volumes 7' to allow water transport from the upper level 7' to the lower level 7", so that the lower level volumes 7" also ensure a water storage function. Additional connections are provided between the lower level 7" and the upper level to allow for an escape of air and to prevent floating of the sheet 3 when filling the lower level 7" with water. An example of a very suitable material for the water-retaining layer is Floradrain, a polyethylene sheet supplied by Zinco, the Netherlands. This sheet has a density of 2.2 kg/m² and is available in sheets of a dimension of 0.96 X 2.08 m.

The water-retaining layer 3 is preferably covered by a filter layer 4, to prevent that impurities end up in the water-retaining layer. The filter layer 4 may be made of any water permeable filter material known to the man skilled in the art. The filter layer 4 may for example be made of a felt-like or a felt material, any other suitable non-woven material made of natural or synthetic fibers, any other filter or geotex material or woven material known to the man skilled in the art. An example of a suitable material is Isotex, supplied by Bouwenen Milieu, the Netherlands. Isotex is a geotextile made of woven polypropylene strips. It is a highly water permeable material, which is impervious to light, so that algal growth may be prevented. Since it has a coarse woven structure, it can easily dry when it is not contacted with water. Another example of a suitable filter material is Fibertex, supplied by Bouwenen Milieu, which is a non-woven polypropylene-based material.

The filter layer 4 is preferably covered with a fixation layer 5 for receiving a particulate material 6. The fixation layer 5 comprises a three-dimensional structure or net, the surface of which comprises cavities for receiving the particulate material.

It will be understood that the material of which the individual layers 1-5 are made may be adapted to each particular situation, e.g. the density of the material may be varied depending on the available roof load. Care should be taken that the material of which the layers 1-5 are made is water-resistant, i.e. does not degrade when contacted with water for prolonged periods of time, and that it is resistant to micro-organisms. The layers 1-4 may be but need not be connected to each other to improve the strength of the multi-layer structure and to prevent displacement of one or more layers with respect to the others. It will also be understood that two or more of the layers 1-5 may be incorporated into a laminar, multi-layer material to facilitate mounting.

The particulate material 6 may be any particulate material known to the man skilled in the art, for example chopped brick stones, Argex ®, gravel, etc. The particulate material functions to shield the water-retaining layer from daylight and to counteract algal growth.

In a particular example, with the preferred materials disclosed above, the base layer 1 has a density of 1000 g/m², the water absorbing layer 2 has a density of 470 g/m², the water-retaining layer 3 has a density of 2200 g/m², the filter layer 4 has a density of 0.1 g/m², the upper particulate layer 30000 g/m². The over-all density of the above described multi-layer structure is approximately 4120 g/m². With a water level of 5 cm, the density mounts to 84120 g/m². This is comparable to the weight of a gravel layer with a thickness of only 5 cm. In general the weight of the water-retaining structure 10, contained water included, will be around 80 kg/m². This is small as compared to vegetated roofs, the weight of which is virtually always higher than 80 kg/m².

The multi-layer structure 10 may be applied to substantially the whole roof surface 19. It is also possible to cover only part of the roof, depending on the desired water storage capacity. In case part of the roof is covered, care should be taken to contain the multi-layer structure in a closed volume to provide the water storage capacity.

The sheets composing the water-retaining structure 10 will mostly be used in the form of strips of predetermined dimensions. If a larger surface area is to be covered, neighbouring strips will be positioned in an overlapping manner. Neighbouring strips of the multi-layer structure may however also be separated from each other by means of drains, to improve the water discharge rate from the water retaining structure. It is also possible to provide a drain which surrounds the water-retaining structure 10 and guides the water towards the discharge unit 14 . Drains may be formed by folding the layer 5 covered with particulate material 6 down to the water impervious layer 1 and leaving the other layers 2-4 out. Such drains may for example also be provided along the sides of the water-retaining structure.

The device of this invention comprises at least one water discharge pipe for discharging water from the water-retaining structure 10 to a water consumption circuit. The inlet 9 towards the water discharge pipe is located somewhere at a position within the thickness of the water-retaining structure 10, but below its upper level. A water-level detector 8, for example a float, is mounted in the water discharge pipe, for detecting the level of the water stored in the water-retaining structure 10. The position of the float 8 is adjustable in height direction to allow controlling the water level. The float 8 is provided to be opened and allow a discharge of water through the discharge pipe if the water level in the water-retaining structure exceeds a first predetermined level. Water will in general be discharged to a second predetermined level. Discharged water is collected in the water consumption circuit, which may comprise a sanitary equipment, a water storage volume 11, for example a container or a pond, etc.

The water flow within the device of this invention is preferably controlled by a water level monitor 12 as will be described hereafter. The water-level detector or float 8 is coupled to the monitor 12 to ensure that water is supplied from the pond 11 to the water-retaining structure 10, if the water level in the water retaining structure becomes lower than a third predetermined value. This will usually be done by means of a pump.

The monitor 12 may also be coupled to the water consumption unit, for example a sanitary equipment, to provide a water flow from the water-retaining structure 10 towards a sanitary equipment, upon a signal from the sanitary equipment that water replenishment is required. The monitor 12 detects from the position of the water level detector 8, the water level in the water-retaining structure 10. If this is sufficiently high, the monitor 12 controls a water flow from the water-retaining structure to the sanitary equipment until it receives a signal from the sanitary equipment that the water is replenished. If this is insufficient, the monitor 12 ensures a water flow from the water storage volume 11 towards the sanitary equipment.

The water storage volume may be a container 11 or a volume in which water evacuated from the water-retaining structure 10 is at least temporarily stored. As can be seen from figure 2, it may be preferred to capture the water coming from the water-retaining structure 10 in a first pond. The first pond forms an overflow to a water reservoir mounted below the pond, for storing the water for a longer period of time.

Preferably the multi-layer structure 10 is fixed to the sides of the roof with appropriate fixation means known to the man skilled in the art.

It is furthermore possible to mount one or more solar panels to the roof, and to have the water stored in the water-retaining sheet passing trough it, to heat the water.

It is also possible to cover the multi-layer structure with floor tiles or any other material suitable to walk on.

The water which is recuperated in this way is suitable for further consumption, in applications such as for example garden irrigation, sanitary equipment, cleaning, washing machines, etc. It will be understood from the above given description that the device of this invention has a simple construction, may easily be installed and is cost efficient.

The functioning of the device of this invention can be described as follows. Water falling down from the air seeps through the particulate layer 5-6, the filter layer 4 and is captured in the water storage volumes 7'. The water passes from the water storage volumes 7', through the connections 15 to the water storage volumes 7". Air is allowed to escape from the water storage volumes 7". The water-absorbing layer 2 absorbs part of the water. As the inlet to the water discharge system 14 is somewhat countersunk with respect to the water retaining structure 10, water flows to the discharge system 14 as soon as the water level reaches the level of the inlet. As soon as it is detected by the float 8 that the water-level in the water-retaining layer 3 reaches a first predetermined level, the float is opened to discharge water to a second level. The water is discharged towards the container or to the sanitary equipment, if there is a need to replenish water in the sanitary equipment. If the water level gets lower than a third predetermined value, the monitor 12 controls for a back flow of water from the pond or container 11 to the water retaining structure. If the monitor receives a signal from the sanitary equipment that there is a need to replenish water, water is supplied from the water retaining structure 10 or the pond 12, depending on the water level in the water retaining structure 10.

## Claims

1. A device suitable for collecting and at least temporarily storing water on a substantially horizontal supporting surface to be at least partly covered by a multi-layer structure (10), the multi-layer structure comprising the following layers:
(a) a base layer (1) provided to be applied to the flat surface, the base layer (1) being substantially impermeable to water,
(b) a water-retaining layer (3) comprising a plurality of water storage volumes (7) for receiving and storing water,
(c) a filter layer (4) covering the water-retaining layer (3),
**characterised in that** between the base layer (1) and the water-retaining layer (3), a layer of a water absorbing material (2) is applied which allows positioning of the water-retaining layer, **in that** at least part of the water storage volumes (7) of the water-retaining layer are dimensioned such that they are capable of containing bulk water (18), **in that** the device comprises a water-level detector (8) for detecting a level (13) of the water (18) contained in the water-retaining layer (3) and discharging water from the multi-layer structure (10) if the water level in the water-retaining layer (3) exceeds a first predetermined value until a second predetermined water-level is obtained, the water being discharged towards a water consumption circuit.

2. A device as claimed in claim 1, **characterised in that** the water consumption circuit comprises a water storage volume (11), and **in that** the water level detector (8) is coupled to a monitor (12) for controlling a water flow from the water storage volume (11) to the water-retaining structure (10) if the water-level (13) in the water-retaining layer (3) is lower than a third predetermined value.

3. A device as claimed in claim 1 or 2, **characterised in that** the water consumption circuit comprises a sanitary equipment and **in that** the monitor (12) is provided to allow for a water flow towards the sanitary equipment upon receiving a signal from the sanitary equipment that replenishment is required, the water flow originating from either the water-retaining device (10) or the water storage volume (11) in case the water level in the water-retaining device is lower than a fourth predetermined value.

4. A device as claimed in any one of claims 1-3, **characterised in that** the water-retaining structure (10) is on top covered by a layer (6) of a porous particulate material.

5. A device as claimed in any one of claims 1-4, **characterised in that** between the filter layer (4) and the layer of the porous particulate material (6), a layer (5) for receiving and fixing the particulate material is provided.

6. A device as claimed in any one of claims 1-5, **characterised in that** the position of the float (8) is adjustable in height direction of the water-retaining structure (10).

7. A water-retaining structure as claimed in any one of claims 1-6, **characterised in that** the water absorbing layer (2), the water-retaining layer (3) and the filter layer (4) are comprised in one single multi-layer film.

8. A water-retaining structure as claimed in any one of claims 1-7, **characterised in that** the water-retaining structure (10) is applied to a part of a building selected from a roof (17) of the building or a substantially flat ground surface in the vicinity of the building.

9. A substantially flat roof at least partly covered with the water-retaining structure of any one of the claims 1-8.
